# EUROPEAN PATENT APPLICATION

(11) **EP 1 927 924 A1**
(43) Date of publication of application: **04.06.2008**
(21) Application number: 07022766.5
(22) Date of filing: 23.11.2007
(51) Int. Cl.: G06F 17/30, G06Q 10/00

(54) **Traceability system, traceability method and traceability program**

(30) Priority: 30.11.2006 JP 2006324076
(71) Applicant: Hitachi, Ltd., Chiyoda-ku Tokyo 100-8280 (JP)
(72) Inventor: Yoshida, Takahiro, Tokyo 100-8220 (JP); Kamada, Yoshiharu, Tokyo 100-8220 (JP); Tateishi, Jun, Tokyo 100-8220 (JP)
(74) Representative: Strehl Schübel-Hopf & Partner

(57) **Abstract**

Provided is a traceability system 100 configured of: an access request receiving section 152 for receiving an access request to dispersedly located pieces of traceability information through a communication device, an access authority checking section 154 for checking access authority to the traceability information targeted by the access request, a location specification section 156 for specifying a location of a piece of traceability information to which the user requests access, in reference to a location management master database in which each piece of traceability information is associated with a location thereof, and an access request execution section 158 for executing an access request from the user, in accordance with the specified location of the traceability information.

## Description

### CROSS-REFERENCE TO RELATED APPLICATIONS

The present application claims a priority from Japanese Patent Application No. 2006-324076 filed on November 30, 2006, the content of which herein incorporated by reference.

### BACKGROUND OF THE INVENTION

### 1. Field of the Invention

The present invention relates to a traceability system, a traceability method, and a traceability program. In particular, the present invention relates to a traceability system, a traceability method, and a traceability program with which pieces of traceability information are made accessible, the pieces located at dispersed locations in product distribution in which multiple companies across companies or company groups participate, and which are capable of appropriately controlling access authority to the traceability information.

### 2. Related Art

In recent years, there has been a growing demand for the traceability of products. Specifically, traceability refers to the ability to later trace the transition of information related to the distribution channel of a product and information on other various attributes (hereinafter referred to as traceability information). The traceability information includes information related to temporal distribution steps, storage locations, and a maintenance record of the product throughout the various distribution steps beginning from production of a product, shipment, sales, use by an end user, up to disposal, recycle and the like. The growth of demand is attributable, for example, to; the demand for strengthening the international competitiveness of domestic industries by improving overall efficiency of a product distribution system in which multiple companies participate, beyond a distribution system of a single industrial group; the demand for user protection and minimization of damage to a company at the occurrence of product deficiency and fault such as a recall; and the prevention of illegal export of stolen goods, goods restricted for export and the like.

As a technique for implementing such traceability among multiple companies, Japanese Patent Application Laid-open Publication No. 2005-267625 discloses a traceability system aiming to solve the problem that even if an individual item is given an ID, the item cannot be traced due to a change of the ID resulting from the processing of the item in a company. The traceability system is for managing individual items which are distributed through multiple locations while being changed in form in at least one of the multiple locations, and includes receiving means, associating means and specifying means. To be specific, the receiving means receives, from an information processor provided to each of the multiple locations, pieces of change information each indicating a distribution state and a form change of a certain individual item. The associating means associates the pieces of received change information with identification information that identifies the item. Then, the specifying unit specifies a distribution channel of the individual item by use of the associated change information.

### SUMMARY OF THE INVENTION

Maintenance business forms of so-called "multi-vendor maintenance" have been increasingly used recently, where a single company, providing maintenance of products (including sales, maintenance business and the like) deals not only with its own products or products of a manufacturer (vendor) of the same group, but with products of manufacturers of other groups, widely. However, various kinds of company and trade secrets are included in traceability information. For this reason and the cost of labor, it has been difficult to collectively manage, in one location, traceability information held by the companies when various steps of distribution of a product are shared among multiple companies across companies or company groups, as in the above case. Hence, in such a traceability system where the product distribution steps are shared among multiple companies across companies or company groups, a wide variety of users are to access pieces of traceability information located at the dispersed locations. However, it is difficult even to know which location each piece of the traceability information is located at, and no traceability system has been capable of allowing a user to freely access these pieces of information. Accordingly, the development of such a traceability system has been desired.

In addition, in the conventional distribution system where manufacturing and maintenance are shared among companies within a single group, a serious problem has not been caused by the unlimited exchanging and sharing of traceability information among the companies of the same group. However, in a case where the product distribution steps are shared by multiple companies across companies or company groups, authority for processing the traceability information by a user such as referencing, updating, and deleting (referred to as access authority, below) should not be vested equally in users because of the aforementioned trade secrets and the like. In other words, access authority to traceability information needs to be controlled accurately and in detail, according to types of product, more specifically, according to individual lots and individual items of the same type of product. However, no traceability system has been capable of providing the above solutions, and the development of such a traceability system has been demanded.

Accordingly, the present invention has been made in view of the above object and mainly aims to provide a traceability system, a traceability method and a traceability program in which: in product distribution where multiple companies across companies or company groups participate, pieces of traceability information located at dispersed locations are freely accessible, and access authority to the pieces of traceability information can be controlled accurately.

In order to solve the above problems, a traceability system of the present invention is configured to provide access to pieces of traceability information located at dispersed locations on the products, in product distribution where multiple companies across single companies or groups participate. The system includes a portal site function section which all users access as a gateway to the dispersed traceability information through a communication network, and which is connected to the communication network through a communication device. This portal site function section includes: an access request receiving section for receiving, through the communication device, a request from the user for access to the dispersed traceability information on products; an access authority checking section for checking whether the user having requested access is authorized to access the traceability information for which the access is requested; a location specification section for specifying a location of the traceability information requested for access by the user, in a location management master database where each piece of traceability information and a location of the traceability information are associated with each other; and an access request execution section for executing an access request from the user according to the location of the traceability information specified by the location specification section.

In addition, it is preferable that a part or all of a piece of the dispersed traceability information on the products may be stored, according to a predetermined format in an electronic tag that is a memory attached to each of the products. Rest of the piece of traceability information on the product is preferably stored in a center information database of an information center server.

Meanwhile, the access authority checking section preferably includes the processing of determining whether or not the access request from the user requests an appropriate business relationship, in reference to a business relationship master database storing information on business relationships between companies, recognized as being appropriate among transactions between companies that constitute the product distribution.

Moreover, the access authority checking section preferably includes the processing of determining whether or not the access request from the user requests a proper business process sequence, in reference to a business process master database in which business processes constituting the product distribution and a sequence for the business processes are associated with each other.

Furthermore, the access authority checking section preferably includes the processing of determining whether or not the access request from the user requests a suitable processing content, in reference to a database which stores, for traceability information on each product, information on suitable contents set for every user.

Additionally, the database which stores, for traceability information on each product, information on suitable contents set for every user includes: a processing authority database which is provided to the information center server, and in which each product and suitable processing contents for the traceability information on the product are associated with each other; and a processing authority location management database in which each product and a location of information on the suitable processing contents for the traceability information on the product are associated with each other. The access authority checking section preferably includes: specification processing for specifying a location, in the processing authority location management database, of information on the suitable processing contents for the traceability information on the product for which the user requested access; and determination processing for determining whether ornot the access request of the user requests suitable processing contents for the traceability information requested for access, in reference to the processing authority database according to the specified location of the suitable processing contents for the traceability information.

In addition, it is preferable that the format with which a part or all of the traceability information on each product is stored in the electronic tag differs in accordance with the industry performing the product distribution.

Further, the portal site function section preferably includes an encoder/decoder for encoding and decoding the traceability information using a corresponding one of an encoder key and a decoder key obtained from an encoding/decoding database which stores the keys for encoding and decoding the traceability information.

Meanwhile, in a traceability method of the present invention, a computer executes a traceability system for achieving access to pieces of dispersed traceability information on the products, in product distribution in which multiple companies across single companies and groups participate. The computer includes a portal site function section which all users access as a gateway to the dispersed traceability information through a communication network, and which is connected to the communication network through a communication device. This portal site function section is configured to execute: processing for receiving, through the communication device, a request for access to the dispersed traceability information on products from the user; processing for checking whether the user having requested access is authorized to access the traceability information for which the access is requested; processing for specifying a location of the traceability information requested for access by the user, in a location management master database where each piece of traceability information and a location of the traceability information are associated with each other; and processing for executing an access request from the user according to the location of the traceability information specified by the location specification section.

Meanwhile, in a traceability program of the present invention, a computer executes a traceability system for achieving access to pieces of dispersed traceability information on the products, in product distribution in which multiple companies across single companies and groups participate. Here, the computer is caused to execute: a receiving step for receiving, through the communication device, a request for access to the dispersed traceability information on products; a checking step for checking whether the user having requested access is authorized to access the traceability information for which the access is requested; a specification step for specifying a location of the traceability information requested for access by the user, in a location management master database in which each piece of traceability information and a location of the traceability information are associated with each other; and an execution step for executing an access request from the user according to the location of the traceability information specified by the location specification section.

Other objects and solving means disclosed in the present application will be made clear from the description of the preferred embodiments and the drawings.

According to the present invention, dispersed pieces of traceability information can be, accessed easily and access authority to these pieces of information can be appropriately controlled, for product distribution in which multiple companies participate, beyond a distribution system of a single industrial groups.

### BRIEF DESCRIPTION OF THE DRAWINGS

Fig. 1 is a network configuration diagram including a traceability system of the present embodiment;
Fig. 2 is a diagram illustrating one example of business processes in the traceability system of the present embodiment;
Fig. 3 is a diagram showing processing flow example 1 of a traceability method of the present embodiment;
Fig. 4 is a diagram showing processing flow example 2 of the traceability method of the present embodiment;
Fig. 5 is a diagram showing processing flow example 3 of the traceability method of the present embodiment;
Fig. 6 is a flow chart showing an operating procedure example 4 of the traceability method of the present embodiment; and
Fig. 7 is a flow chart showing an operating procedure example 5 of the traceability method of the present embodiment.

### DESCRIPTION OF THE PREFERRED EMBODIMENTS

### --System configuration--

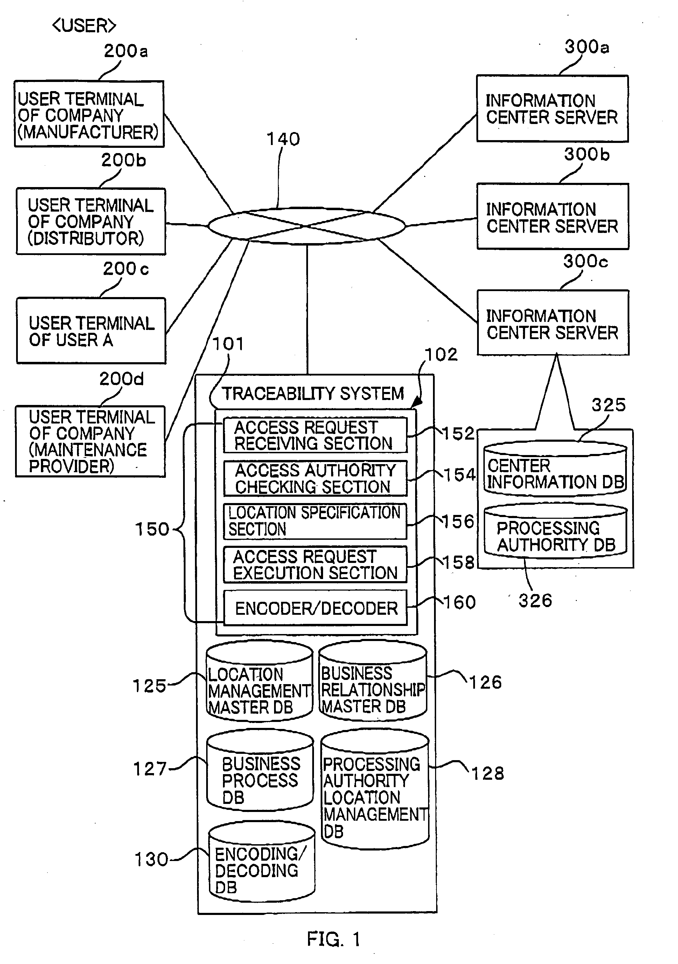

Hereinafter, an embodiment of the present invention will be explained in detail with reference to the drawings. Fig. 1 is a network configuration diagram including a traceability system 100 of the present embodiment. The traceability system 100 (referred to as system 100, below) is a system implementing access to each piece of product traceability information provided in a dispersed manner, in product distribution in which multiple companies participate, beyond a distribution system of a single company or a single group of companies. The system 100 of the present embodiment is a server computer implementing a web portal site in the Internet. Here, "companies included in product distribution" refers to all of companies that mainly carry out business operations in various product distribution steps such as a manufacturer (vendor), a distributor, a maintenance provider and the like.

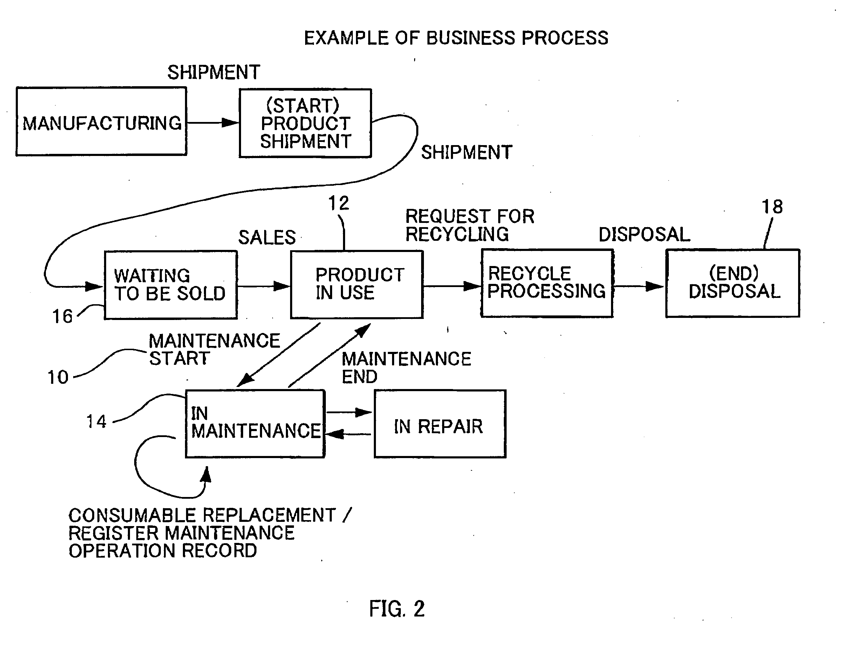

Moreover, in the description, a "product" includes any component or partly-finished product, as long as it is shipped from the manufacturer (vendor) and is distributed. Additionally, products include those manufactured by a variety of manufacturers, while these products are passed, not only by companies of the same group as the manufacturer but by many other companies, to various distribution steps such as sales, maintenance operations, and recycling operations. In the present embodiment, assumed is a distribution network throughout a single lifecycle of a product from product shipment to disposal as shown in Fig. 2. Each of the periods between static "statuses" outlined with a box in Fig. 2 such as product shipment, waiting to be sold, or the like illustrates a "transition" indicated by an arrow herein. Each of the dynamic actions such as "shipment" and "sales" are referred to as a "business process" in the present application.

Further, each business process being a dynamic "transition" always simultaneously indicates a "transaction" between companies or transaction between a company and an individual consumer. Two or more companies and individuals are involved in a transaction, and this pair of parties concerned in the transaction is referred to as a "business relationship" in this application.

The functional configuration of the system 100 is as follows. In order to implement the function of executing a traceability method of the present invention, various programs 102 are provided to a program database 101 such as a rewritable memory, and the programs 102 are read to the memory so as to be executed by a CPU being a calculation device. Additionally, the system 100 includes: an input interface such as various buttons and the like; an output interface such as a display; and a communication device or the like for transmitting and receiving data to and from external devices such as various user terminals 200a to 200d and information center servers 300a to 300c. By use of this communication device, the system 100 connects to external devices such as various user terminals and information center servers, and to a variety of networks 140 such as a public network, the Internet and a wireless LAN, and performs data transmission/reception. An I/O unit buffers data and performs respective intermediate processing between each of function units of the system 100 and the communication device. Although an explanation has been given for the system 100, components other than the function units and data bases described below are omitted in the drawing.

Subsequently, an explanation will be given for function units constituting and retained in the system 100 on the basis of the programs 102, for example. Incidentally, assume that the system 100 can make use of: a location management master database 125, a business relationship master database 126, a business process database 127, a processing authority location management database 128, and an encoding/decoding database 130. Each of the databases 125 to 128, 130 can be provided to an appropriate storage such as a hard disk drive provided to a computer device of the system 100. Otherwise, these databases 125 to 128, 130 may exist in the network 140 apart from the system 100. In such a case, the system 100 is provided with a data base management system (DBMS) and accesses each of the databases 125 to 128, 130 through the network 140, to execute processing such as registering information and retrieving information.

The system 100 as described above includes a portal site function unit 150 which all users access, through the communication network, as a gateway to pieces of traceability information located at the dispersed locations, and which is connected to the communication network through the communication device. As will be described below in detail, this portal site function unit 150 makes it possible for all the users to collectively and automatically access pieces of traceability information of products, each of which is located in a dispersed manner, even when the specific storage locations of the pieces of information are unknown.

Here, a "user" in the present application refers to the user of the system 100. Specifically, the user is one that makes an access request for the various pieces of traceability information located at the dispersed locations, that is, various kinds of processing requests such as reference, update, registration, and deletion. A specific example of such various access requests for various pieces of traceability information is a request made along with: an operation by a maintenance service person of referencing maintenance record information of a certain product; or an operation of updating (rewriting) information concerning the latest maintenance day.

Meanwhile, part or all of a piece of the dispersed traceability information on the products can be stored, according to a predetermined format, in an electronic tag that is a memory attached to each product. Then, the rest of traceability information on the product can be preferably stored in a center information database 325 of information center servers 300a to 300c.

Use of the electronic tags has been promoted with the initiative of the Ministry of Economy, Trade and Industry. However, in the present state, capacity of a currently used electronic tag is no more than around several hundred to several thousand bytes, and thus it is impossible to store the whole traceability information in an electronic tag and attach the tag to a product. Accordingly, as in the present embodiment, it is more realistic to store the rest of the piece of information that cannot be stored in the electronic tag, in an information center server (to be specific, a web server or the like) and to access the information through the portal site function unit 150. Here, the information center server is, for example, one in a company such as a manufacturer and a maintenance provider, which mainly generate traceability information along with the operations thereof. However, storage capacity of the electronic tags is expected to be enlarged significantly in the future. In that case, the configuration of the present embodiment is advantageous since a larger amount of, or the entire traceability information can be stored in the electronic tag, and the configuration can be flexibly adapted to a change of situation such as a variation in storage capacity of the electronic tag and the like.

Additionally, with regard to the predetermined format in which part of or the entire traceability information on a product is stored in the electronic tag, it is preferable that a suitable format be set for each of the industries performing the product distribution. Storage formats for traceability information should naturally differ from one another, since properties of a product vary among different industries such as the electrical industry and the food industry, and business practice also differs among industries. Hence, the system 100 is advantageous in that it can be flexibly applied as a traceability system to a variety of industries by setting a suitable storage format of traceability information for individual industries, as described above.

The portal site function unit 150 includes an access request receiving section 152 for receiving, from a user through the communication device, an access request for the traceability information on each product located in a dispersed manner.

Additionally, the portal site function section 150 includes an access authority checking section 154 for checking, whether the user having made the access request has the authority to access the requested traceability information. As will be described below, in the present embodiment, there are basically three patterns of methods by which the access authority checking section 154 checks the access authority.

Firstly, the access authority checking section 154 can preferably include processing for determining whether or not the access request from the user requests an appropriate business relationship. This processing is made in reference to the business relationship master database 126 in which information on business relationships determined to be appropriate is stored, among transactions between companies that constitute product distribution. An "appropriate business relationship" refers to a combination such as "maintenance operations for a *XX manufacturing* (name of company) product is always carried out by *YY maintenance provider"*. The combination can be set more in detail, such as for every business process.

In addition, the access authority checking section 154 can preferably include processing for determining whether or not the access request from the user requests a proper business process sequence. This determination is made in reference to the business process master database 127 in which business processes constituting product distribution and a proper sequence of the business processes are associated with each other. Here, a "proper sequence of business processes" refers to a sequence such as that shown in Fig. 2, where one status before a business process "maintenance start" 10 is a business process "product in use" 12, and one status after is a business process "in maintenance" 14.

Hence, use of this configuration can surely prevent, for example, theft or smuggling in secret by a malice user making an access request to rewrite an original business process sequence and causing the system 100 to operate, so that a piece of product traceability information in a "waiting to be sold" status 16 is skipped to a "disposal" status 18.

Additionally, the access authority checking section 154 may preferably include processing for determining whether or not the access request from the user requests a suitable processing content. This determination is made in reference to a database which stores information related to suitable processing contents set for each user, the processing being those to be performed on the traceability information on the products. Here, processing contents include the processing of referencing, updating, registering, and deleting traceability information. In this way, access authority can be appropriately controlled by setting, in detail, permission/no permission of access authority for traceability information including trade secrets and the like, for each user and for each processing content (content of access request). Hence, the configuration can avoid setting permission equally to all users for accessing traceability information including trade secrets and the like.

Additionally, the database storing information related to suitable processing contents to be performed on the traceability information on the products set for each user includes a processing authority database 326 and the processing authority location management database 128. Specifically, the processing authority database 326 is a database which is provided in the information center server, and in which the products and suitable processing contents to be performed on the traceability information are respectively associated with each other. Meanwhile, the processing authority location management database 128 is a database in which the products and locations of information pieces of suitable processing contents to be performed on the traceability information are respectively associated with each other. Here, the access authority checking section 154 can preferably include the following processing of: specifying, with reference to the processing authority location management database 128, a location of piece of information of the suitable processing content information to be performed on the product traceability information for which the user requested access; and determining whether or not the access request from the user requests a suitable processing content to be performed on the traceability information for which the access is requested, according to the specified location of the information on the suitable processing content to be performed on the traceability information, and in reference to the processing authority database 326.

It should be noted that the "traceability information" here may refer not only to traceability information stored in the center information database 325 but may also refer to traceability information stored in an electronic tag on a product. Meanwhile, the "location of information on the suitable processing contents to be performed on the traceability information of the products" ultimately refers to an information center server including a processing authority database specifying the processing authority for the product. Each of the information center servers is supposed to be a web server or the like, controlled by a company mainly generating traceability information such as a manufacturer and a company providing maintenance. In the case of a manufacturer, traceability information is newly generated at the completion of a product. Meanwhile in the case of a company providing maintenance, maintenance record information being one type of traceability information is newly generated at a maintenance operation.

with this configuration, access authority to traceability information for each of the users and for each of the processing contents need not be set collectively by the portal site function section 150 of the system 100. Instead, the company generating the information can itself control access authority for each of the users in detail, in accordance with the confidentiality and the like of the information.

Additionally, the portal site function section 150 includes a location specification section 156 and an access request execution section 158. To be specific, the location specification section 156 is for specifying, in reference to the location management master database 125 in which traceability information and a location thereof are associated with each other, a location of traceability information for which the user requested access. The access request execution section 158 is for executing the access request from the user according to the traceability information location specified by the location specification section 156.

Hence, even without knowing the stored location, any user can automatically (as long as access is authorized) access required information and execute processing, only by accessing the portal site function section 150 and transmitting various access processing requests to the portal site function section 150. As a result, the user is enabled to access not only traceability information of his or her own group company, but also traceability information of a variety of other group companies. Here, although the pieces of information are located in a dispersed manner, the user can freely access and execute various processing.

Moreover, the portal site function section 150 includes an encoder/decoder 160, where the traceability information is encoded or decoded by use of an encoder key or decoder key. The encoder key and decoder key are obtained from the encoding/decoding database 130 in which keys for encoding and decoding the traceability information are stored.

With this configuration, access to traceability information by a user unauthorized to decode the traceability information can be surely prevented, by appropriately encoding particularly confidential information,' for example, among traceability information stored in information center servers and in electronic tags on products. In contrast, a user authorized to decode the traceability information can access the portal site function section 150, receive a decoder key from the encoding/decoding database 130, and access the traceability information.

Note that each of the above-mentioned function sections 150 to 160 of the system 100 can be implemented as hardware, or as a program stored in an appropriate storage such as a memory and an HDD (hard disk drive). In this case, a CPU of the system 100 reads a program to the memory from the storage according to the execution thereof, and executes the program.

Next, an explanation will be given for the user terminals 200a to 200d- In Fig. 1 as an example, illustrated are: a user terminal 200a of a manufacturer that_is a company, a user terminal 200b of a distributor that is also a company, a user terminal 200c of a user A who is a general consumer, and a user terminal 200d of a maintenance provider that is a company. Here, the user terminal 200c of a user A who is a general consumer may be omitted in the configuration. In this case, it suffices that the product is traceable by knowing the present location (owned by A) in reference to the traceability information of the distributor that has sold the product to user A.

Each of the user terminals 200a to 200d is a computer such as a personal computer and various kinds of mobile phones. In order to implement a client function executing the traceability method of the present invention, the user terminal includes a program database such as a rewritable memory provided with programs such as an appropriate business application, a client function of the traceability system, and the like. The programs are read to a memory and are executed by a CPU being a calculation device. In addition, each of the user terminals 200a to 200d includes: an input interface such as various buttons and the like; an output interface such as a display; and a communication device or the like for transmitting and receiving data to and from an external device such as the system 100. By use of this communication device, each of the user terminals 200a to 200d connects to an external device such as the system 100, and to a variety of networks 140 such as a public network, the Internet and a wireless LAN, and performs data transmission/reception. An I/O unit buffers data and performs respective intermediate processing between each program of the user terminals 200a to 200d, and the communication device. Components of the user terminals 200a to 200d are omitted in the drawing.

Next, an explanation will be given for information center servers 300a to 300c. In Fig. 1 as an example, three information center servers 300a to 300c are illustrated. Each of the information center servers 300a to 300c is a computer such as a web server which stores various traceability information in a center information database 325 provided to each information center server. In order to implement various functions for executing, in combination with the system 100, the traceability method of the present invention, the information center server includes a program database such as a rewritable memory provided with appropriate programs. The programs are read to a memory and are executed by a CPU being a calculation device.

In addition, each of the information center servers 300a to 300c includes: an input interface such as various buttons and the like; an output interface such as a display; and a communication device or the like for transmitting and receiving data to and from an external device such as the system 100. By use of this communication device, each of the information center servers 300a to 300c connects to an external device such as the system 100, and to a variety of networks 140 such as a public network, the Internet and a wireless LAN, and performs data transmission/reception. An I/O unit buffers data and performs respective intermediate processing between each program of the information center servers 300a to 300c, and the communication device. Additionally, the information center servers 300a to 300c are respectively provided with processing authority databases 326. Components of the above-mentioned information center servers 300a to 300c other than the processing authority database 326 are omitted in the drawing.

Although only three information center servers 300a to 300c have been exemplified in Fig. 1, a larger number of information center servers can be provided according to need. In the present embodiment, each of the information center servers 300a to 300c is a server of a company that generates traceability information, such as a manufacturer and a maintenance provider, and the traceability information of the company is stored in the server. The server sets access authority to traceability information for each user, by use of information stored in the processing authority database 326. Each of these information center servers 300a to 300c may perform various management processing not only on the traceability information stored in the center information database 325 but also on traceability information generated in its own company and stored in an electronic tag on the product. For example, the processing authority database 326 may store not only the traceability information stored in the center information database 325, but also the traceability information stored in the electronic tag in association with suitable processing contents for each product. Then, the information can be provided to the access authority checking section 154 of the system 100 at an access request from a user.

### --Database structure--

Next, explanations will be given for data structures of the location management master database 125, the business relationship master database 126, the business process database 127, the processing authority location management database 128, the encoding/decoding database 130, the center information database 325, and the processing authority database 326, all of which are used by the system 100 and each of information center servers 300a to 300c of the present embodiment.

The location management master database 125 is a database in which each piece of traceability information and a location of the each piece of traceability information are associated with each other. Moreover, the location management master database 125 is a group of records in which the following information pieces are associated with each other. Examples of the information pieces are: an industry code, a business process code, a version of the locating rule (referred to as a version below), a traceability information code (such as codes indicating "maintenance record" and "consumable replacement date"), a name of traceability information (such as "maintenance record" and "consumable replacement date"), information location category (indicating any one of an electronic tag and the center information database 325), a stored location in a tag (if stored in a tag) (such as "(top) 51 to 58 bytes" in a format of an electronic tag), an encoding category of the stored location in a tag, an encoder key reference code and a decoder key reference code, following four codes in a case of traceability information stored in the information center servers 300a to 300c, that is, a manufacturer code, a product classification code, an item specification code (such as a serial number), a maintenance provider code, and respective URLs of information center servers 300a to 300c.

The business relationship master database 126 is for storing information on an appropriate business relationship between companies, among business relationships between companies included in the product distribution. The business relationship master database 126 is a group of records in which the following information pieces are associated with each other. Examples of the information pieces are: an industry code, a business process code, a company code, a company role code (such as a code indicating a maintenance provider), a business relationship company code, and a business relationship company role code (such as a code indicating a manufacturer).

The business process database 127 is a database in which business processes constituting a product distribution and a proper sequence thereof are associated with each other. The business process database 127 is a group of records in which the following information pieces are associated with each other. Examples of the information pieces are: an industry code, a business process code, a before-processing state code, name of the before-processing state (such as "in use"), an after-processing state code, name of the after-processing state (such as "in maintenance"), a processing code, and name of the processing (such as "maintenance start").

The processing authority location management database 128 is a database in which each product and a location of suitable processing contents to be performed on the traceability information on the each product are associated with each other. The processing authority location management database 128 is a group of records in which the following information pieces are associated with each other. Examples of the information pieces are: an industry code, a business process code, a manufacturer (of the product) code, a product classification code, an item specification code (a code including the above four codes and specifying the individual product), a maintenance provider code, a traceability information code (such as codes indicating "maintenance record" and "consumable replacement date"), name of the center controlling the authority, and a URL of the center controlling the authority.

The encoding/decoding database 130 is for storing keys for encoding and decoding the traceability information.

The center information database 325 is for storing rest of traceability information that cannot be stored in an electronic tag on the product. Here, in the present embodiment, traceability information to be stored in an electronic tag is supposed to be an industry code, a business process code, a version, a manufacturer (of the product) code, a product classification code, an item specification code (a code including the above five codes and specifying the individual product), and other various information and topics. For example, information of a large data size such as the "maintenance record" is supposed to be stored in the center information database 325 instead of an electronic tag.

The processing authority database 326 is a database in which each product and suitable processing contents to be performed on the traceability information of the each product are associated with each other. The processing authority database 326 is a group of records in which the following information pieces are associated with each other. Examples of the information pieces are: a manufacturer code, a product classification code, an item specification code, a traceability information code (such as codes indicating "maintenance record" and "consumable replacement date"), name of traceability information, processing company code, processing company role code (such as a code indicating a maintenance provider), and an access code (such as codes indicating reference, update, and registration).

### --Processing flow example--

Hereinbelow, processing flow examples according to the traceability method of the present invention will be described with reference to the drawings. Note that the operations according to the traceability method described below are achieved by programs read to an appropriate memory to be executed. Each of the programs is configured of codes for the various operations to be described below.

### --Processing flow example 1--

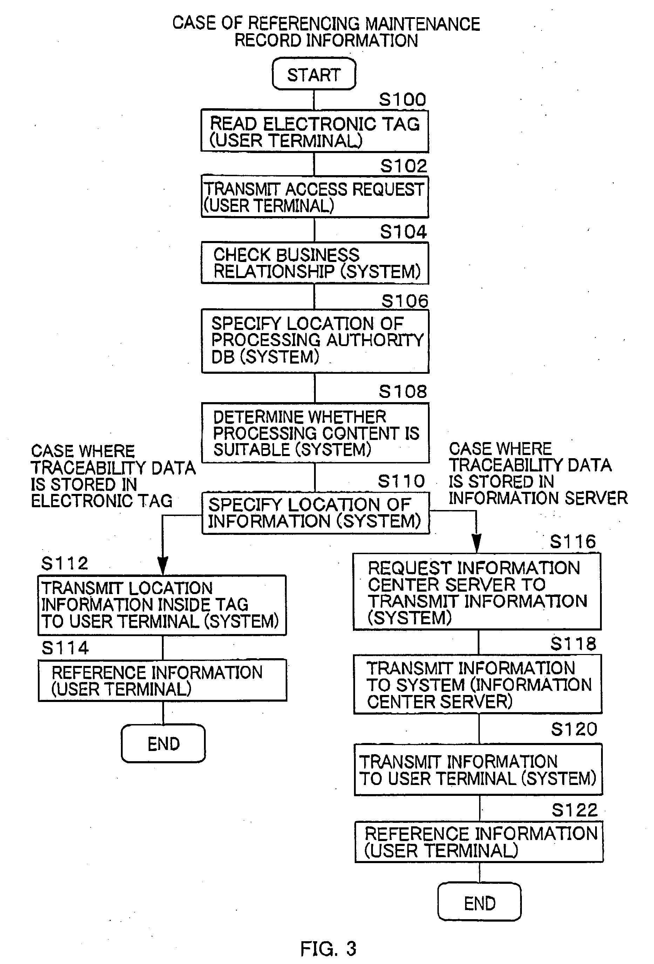

Fig. 3 is a flowchart showing an operation procedure example 1 of the traceability method of the present invention. Firstly, descriptions will be given for the processing of a maintenance provider referencing record information, which is one type of traceability information, on a product being an object in maintenance.

To begin with, the maintenance provider being a user logs in to his/her user terminal 200d, and reads an item specification code on an electronic tag attached to a product, with an electronic tag reader (referred to as reader below). Otherwise, the user inputs the item specification code with a keyboard that is an input interface of the user terminal 200d (s100).

Hence, a screen for designating the required information will appear on the display that is an output interface of the user terminal. With this designation of required maintenance record information, an access request for referencing the maintenance record information of the product is transmitted to the access request receiving section 152 of the system 100 through the network 140 (s102). When a user accesses the system 100 from one of the user terminals 200a to 200d, he/she is always required to make a login request, and then be authenticated by the system 100. This is the same for other following flow examples. From a user input of an ID and a password at this time, the system 100 obtains information such as a company code that specifies the user.

Here, if the maintenance record information is recognized to be traceability information stored in the electronic tag, the information is read from the tag, and the processing is terminated. At this time, in a case where the maintenance record information is encoded, an access request for decoding processing is transmitted to the access request receiving section 152 of the system 100. In addition, when reading information stored in the electronic tag, the reading may by performed after referencing the industry, business process, and version information (of the product) which can usually be read from the tag, and confirming, for example, that the information matches with version information and the like previously stored in an electronic tag layout storing database of the user terminal.

As the electronic tag does not contain the maintenance record information in this case, the processing proceeds to the next step. Subsequently, the access authority checking section 154 references a company code portion of the item specification code of the product stored in the tag (or inputted by the user). Then, in reference to the business relationship master database 126, the access authority checking section 154 determines whether or not the user is in an appropriate business relationship with the manufacturer (s104). If the business relationship is determined to be appropriate, the access authority checking section 154 then specifies the location of the access authority database 326 in which suitable processing contents of the product are stored, in reference to the processing authority location management database 128. In this case, a URL of the corresponding information center server (300c in this case) is specified as the location of the access authority database 326 (s106).

Thereafter, the information center server 300c references, with a function of a program thereof, the processing authority database 326 according to the company code of the user and the item specification code of the product, and reads information on whether the access request of the user (reference of the maintenance record information in this case) is a suitable processing content. This read piece of information is then transmitted to the access authority checking section 154 of the system 100. On the basis of the information, the access authority checking section 154 determines whether or not the processing content requested for access by the user is a suitable one (s108).

If determined suitable in step s108, the location specification section 156 of the system 100 specifies the location of the requested traceability information in reference to the location management master database 125 (s110). As a result, the processing hereafter differs depending on whether the piece of information requested for access by the user is in an electronic tag, or is in the information center server 300c. Although in this case the maintenance record information is supposed to be in the center information database 325 of the information center server 300c instead of being in the electronic tag, descriptions will be given for both the cases in this flow example.

Firstly, in the case where the required traceability information is specified to be in an electronic tag, the access request execution section 158 transmits information on the storage location in the tag (such as "top X bytes to Y bytes in the tag") to the user terminal 200d (s112). Additionally, if the required information is encoded, the encoder/decoder 160 obtains a decoder key from the encoding/decoding database 130 and transmits the key to the user terminal 200d.

Upon receipt of this key, the user terminal 200d references the required information by reading the information on the storage location in the tag (sll4).

Next, in the case where the required traceability information is specified to be in the information center server 300c as a result of step s110, the access request execution section 158 of the system 100 performs processing to request the information server 300c to transmit the required information (s116). With this processing, a program of the information server 300c transmits the information to the system 100 (s118).

Then, the access request execution section 158 of the system 100 transmits the information to the user terminal 200d (s120) while performing processing to retain an access log. The user terminal 200d thus receives and references the required information (s122).

Hence, the processing of the flow example 1 is terminated.

### --Processing flow example 2--

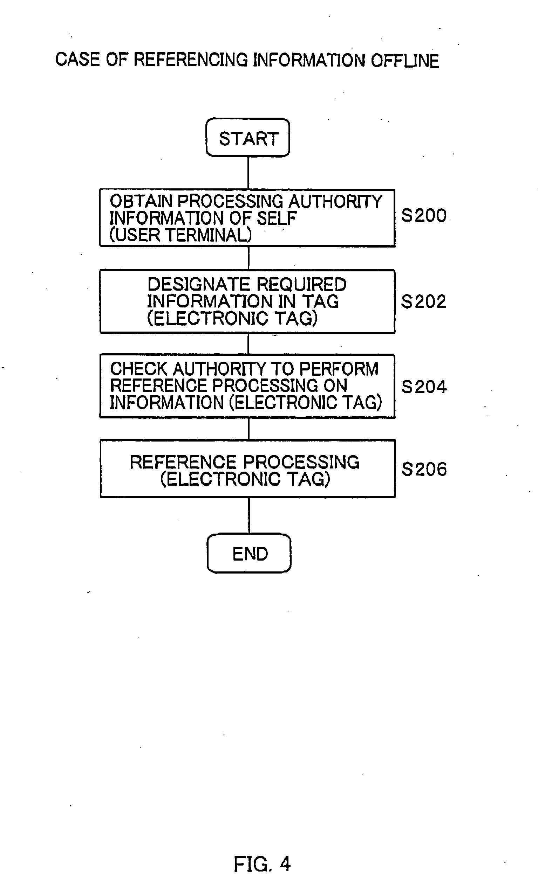

Fig. 4 is a flowchart showing an operation procedure example 2 of the traceability method of the present embodiment. Here, descriptions will be given for the processing of a maintenance provider being a user referencing a date of consumable replacement, which is one type of traceability information, on a product being an object in maintenance. The reference is made offline (from an electronic tag) instead of online (via the Internet). Assumed is a situation of accessing an electronic tag on a product, in a location such as a job site that is not equipped with a computer.

To begin with, the user with the user terminal 200d previously obtains online, by batch processing (collectively), information on his/her own processing authority for each of multiple item specification codes from the access authority database 326 of the information center server through the system 100. The obtained processing authority information is retained in an appropriate storage such as a database (referred to as an "access control master database" below) of the user terminal 200d (s200). A decoder key is obtained and held from the encoder/decoder 160 of the system 100 if necessary.

Thereafter, as for the offline processing, the user firstly designates information on "date of consumable replacement" being the required traceability information in the electronic tag (s202). Then, the user checks whether or not he/she is authorized to perform reference processing on the information, by referencing the processing authority information of himself/herself previously obtained and stored in the access control master database (s204). If the user is authorized to perform reference processing, he/she obtains the data (s206). If encoded, the data is decoded by use of the decoder key. Hence, the processing of the flow example 2 is terminated.

### --Processing flow example 3--

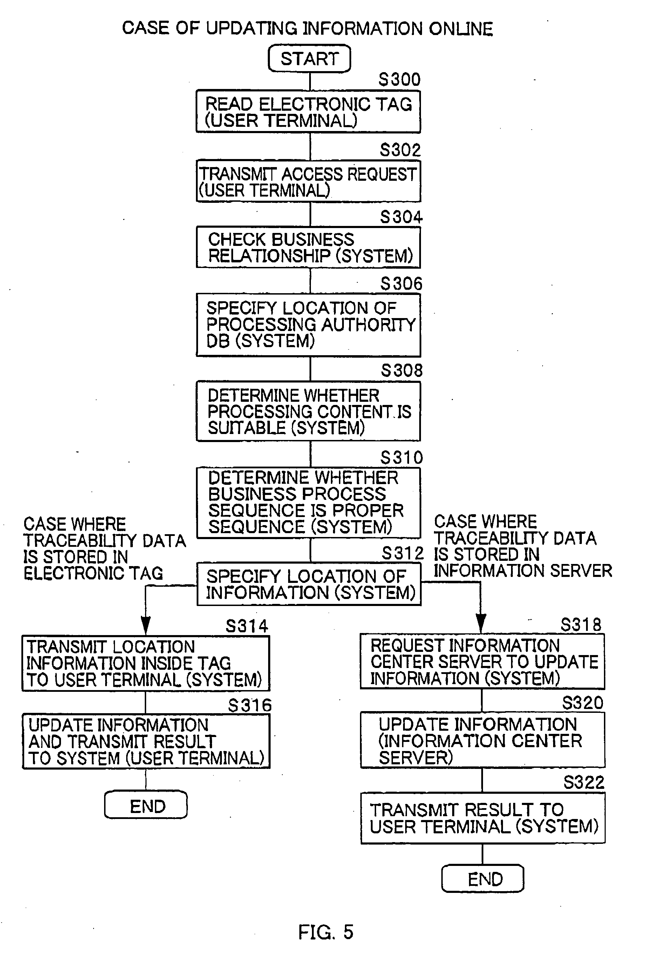

Fig. 5 is a flowchart showing an operation procedure example 3 of the traceability method of the present embodiment. Here, descriptions will be given for the processing of a maintenance provider being a user updating configuration information, which is one type of traceability information, on a product being an object in maintenance at the time of consumable replacement.

To begin with, a maintenance provider being a user logs in to his/her user terminal 200d, and reads an item specification code in the electronic tag on the product with an electronic tag reader (referred to as reader below). Otherwise, the user inputs the item specification code with a keyboard that is an input interface of the user terminal 200d (s300).

Hence, a screen for designating information desired to be updated will appear on the display that is an output interface of the user terminal. With this designation of required configuration information, an access request for updating the configuration information of the product is transmitted to the access request receiving section 152 of the system 100 through the network 140 (s302). This processing may be one performed successively with the reading of the electronic tag.

Here, in a case where the configuration information that needs updating is recognized to be stored in an electronic tag and not to require decoding, the information in the electronic tag is updated, and the processing is terminated. At this time, in a case where the maintenance record information is encoded, an access request for decoding processing is transmitted to the access request receiving section 152 of the system 100. In addition, information stored in the electronic tag may be read only after, by referring to the industry, business process, and version information (of the product) which can usually be read from the tag, it is confirmed that the information matches with version information and the like previously stored, for example, in an electronic tag layout storing database of the user terminal.

In this case, the processing proceeds under the assumption that the configuration information is not included in the electronic tag. Subsequently, the access authority checking section 154 of the system 100 references a company code portion of the item specification code of the product stored in the tag (or inputted by the user). Then, in reference to the business relationship master database 126, the access authority checking section 154 determines whether or not the user is in an appropriate business relationship with the manufacturer (s304). If the business relationship is determined to be appropriate, the access authority checking section 154 specifies the location of the access authority database 326 in which suitable processing contents of the product are stored, in reference to the processing authority location management database 128. In this case, a URL of the corresponding information center server (300c in this case) is specified as the location of the access authority database 326 (s306).

Thereafter, the information center server 300c references, with a function of a program thereof, the processing authority database 326 according to the company code of the user and the item specification code of the product, and reads information on whether the access request of the user (update of the configuration information in this case) is a suitable processing content. This piece of information as read is then transmitted to the access authority checking section 154 of the system 100. On the basis of the information, the access authority checking section 154 determines whether or not the processing content requested access by the user is a suitable one (s308).

If determined suitable in step s308, the access authority checking section 154 then determines whether or not the access request from the user requests a proper business process sequence, in reference to the business process master database 127 (s310).

If determined proper in step s310, the location specification section 156 of the system 100 specifies the location of the traceability information requested by the user in reference to the location management master database 125 (s312). As a result, the processing hereafter differs depending on whether the piece of information requested access by the user is in an electronic tag, or is in the information center server 300c. Although in this case the configuration information is supposed to be in the information database 325 of the information center server 300c instead of being in the electronic tag, descriptions will be given for both the cases in this flow example.

Firstly, in the case where the required traceability information is specified to be in an electronic tag, the access request execution section 158 transmits information on the storage location in the tag (such as "top X bytes to Y bytes in the tag") to the user terminal 200d (s314). Additionally, if the required information is encoded, the encoder/decoder 160 obtains a decoder key from the encoding/decoding database 130 and transmits the key to the user terminal 200d.

Upon receipt of this key, the user terminal 200d updates the location information in the tag, and transmits the result to the system 100 (s316). Then, the user terminal 200d retains an access log, and requests for the updating of a processing record and for the update processing of a backup if the terminal includes a backup retention processing function.

Next, if the required traceability information is specified to be in the information center server 300c as a result of step s312, the access request execution section 158 of the system 100 transmits, to the information center server 300c, an access request for the updating the required information (s318). Upon receipt of the request, a program of the information center server 300c updates the information (s320).

The access request execution section 158 of the system 100 then transmits, to the user terminal 200d, the result of update processing on the information (s322), while performing processing to retain an access log.

Hence, the processing of the flow example 3 is terminated.

### --Processing flow example 4--

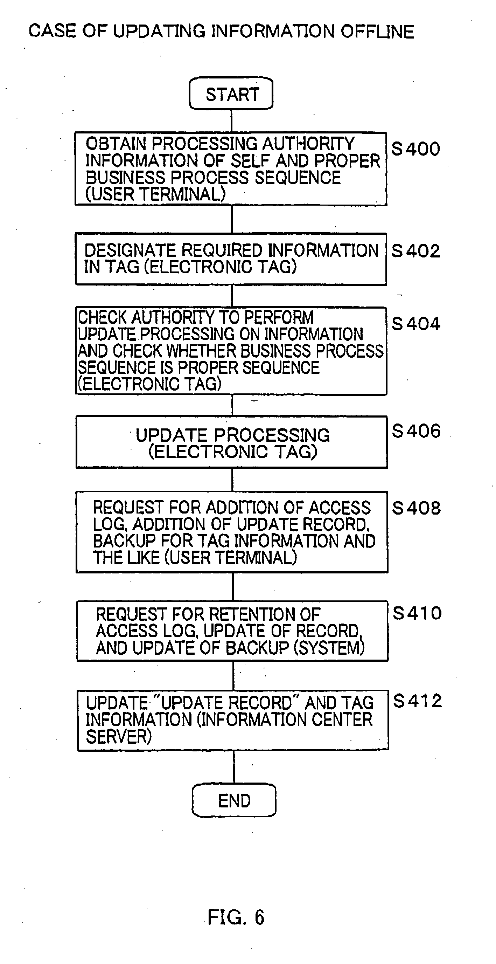

Fig. 6 is a flowchart showing an operation procedure example 4 of the traceability method of the present embodiment. Here, descriptions will be given for the processing of a maintenance provider being a user performing update processing on the latest maintenance date, which is one type of traceability information, for a product being an object in maintenance. The update processing is performed offline (from an electronic tag) instead of online (via the Internet).

To begin with, the user with the user terminal 200d previously obtains online, by batch processing (collectively), information on his/her own processing authority for each of multiple item specification codes from the access authority database 326 of the information center server (300c in this case) through the system 100. The obtained processing authority information is retained in an appropriate storage such as a database (referred to as an "access control master database" below) of the user terminal 200d (s400). Moreover, proper business process sequence information is obtained from the business process master database 127 of the system 100, and is retained in process check master database of the user terminal 200d (s400). An encoder key is obtained and held from the encoder/decoder 160 of the system 100 if necessary.

Thereafter, as for the offline processing, the user firstly designates information on "date of latest maintenance" being the traceability information desired to be updated, in the electronic tag (s402). Then, the user checks whether or not he/she is authorized to perform update processing on the information, by referencing the processing authority information of himself/herself previously obtained and,stored in the process check master database (s404) The user also checks whether or not his/her access request is in a proper business process sequence in reference to the proper business process sequence information previously obtained and stored in the process check master database (s404). If the user is authorized to perform update processing, the information is updated (s406), If necessary, the data is encoded by use of the encoder key.

Thereafter, the user requires a login and accesses the system 100, and requests processing for addition of an access log, addition of an update record, and backup for tag information (s408). Upon receipt of the request, the access request execution section 158 of the system 100 retains an access log, transmits a record update request and a backup update request to the information center server 300c (s410). Upon receipt of the request, the information center server 300c updates the update record information and the tag information (s412).

Hence, the processing for the flow example 4 is terminated.

### --Processing flow example 5--

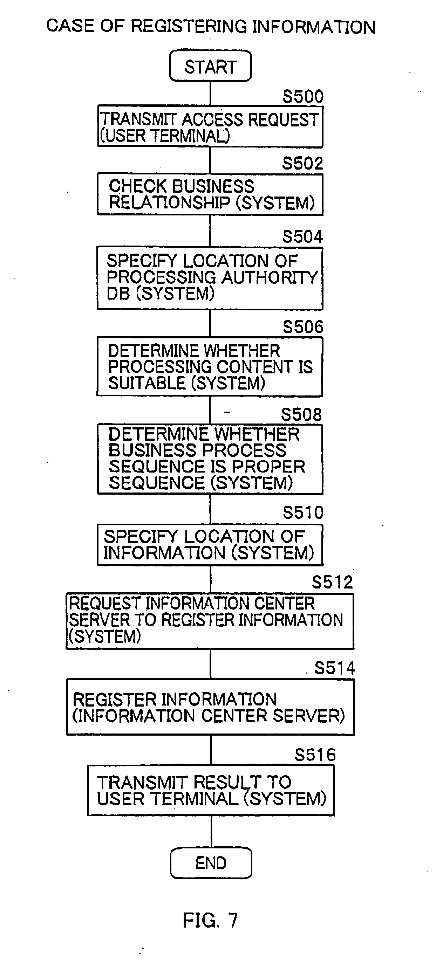

Fig. 7 is a flowchart showing an operation procedure example 5 of the traceability method of the present embodiment. Here, descriptions will be given for the processing of a maintenance provider being a user registering maintenance record information, which is one type of traceability information, for a product being an object in maintenance. Information is stored in the information center server 300c instead of an electronic tag, in every registration processing.

To begin with, a maintenance provider being a user logs in to his/her user terminal 200d, and with the display screen being an output interface of the user terminal, transmits an access request for registration of a certain piece of information to the access request receiving section 152 of the system 100 through the communication network 140 (s500).

Subsequently, the access authority checking section 154 of the system 100 references a company code portion of the item specification code of the product stored in the tag (or inputted by the user). Then, in reference to the business relationship master database 126, the access authority checking section 154 determines whether or not the user is in an appropriate business relationship with the manufacturer (s502). If the business relationship is determined to be appropriate, the access authority checking section 154 specifies the location of the access authority database 326 in which suitable processing contents of the product are stored, in reference to the processing authority location management database 128. In this case, a URL of the corresponding information center server (300c in this case) is specified as the location of the access authority database 326 (s504).

Thereafter, the information center server 300c references, with a function of a program thereof, the processing authority database 326 according to the company code of the user and the item specification code of the product, and reads information on whether the access request of the user (registration of the maintenance record information in this case) is a suitable processing content. This read piece of information is then transmitted to the access authority checking section 154 of the system 100. On the basis of the information, the access authority checking section 154 determines whether or not the processing content requested access by the user is a suitable one (s506).

If determined suitable in step s506, the access authority checking section 154 then determines whether or not the access request form the user requests a proper business process sequence, in reference to the business process master database 127 (s508).

If determined proper in step s508, the location specification section 156 of the system 100 specifies the location of the traceability information requested by the user in reference to the location management master database 125 (s510). Then, if the required traceability information is specified to be in the information center server 300c as a result of step s510, the access request execution section 158 of the system 100 transmits, to the information center server 300c, a request for the registration processing of the desired information (s512). Upon receipt of the request, the information center server 300c registers the information (s514).

Thereafter, the access request execution section 158 of the system 100 transmits the result of the update processing of the information to the user terminal 200d (s516) while performing processing to retain an access log.

Hence, the processing for the flow example 5 is terminated.

As has been described above, according to the present embodiment, dispersed pieces of traceability information can be accessed easily and access authority to these pieces of information can be appropriately controlled, for product distribution in which multiple companies participate, beyond a distribution system of a single industrial group.

Hereinabove, although an embodiment of the present invention has been described specifically with reference to the embodiment, the invention is not limited to this, and various modifications are possible within the scope and spirit of the present invention.

## Claims

1. A traceability system for providing access to pieces of traceability information on products, located at dispersed locations in product distribution in which multiple companies across single companies or company groups participate, the system comprising:
a portal site function unit which all users access as a gateway to the dispersed pieces of traceability information through a communication network, and which is connected to the communication network through a communication device,
the portal site function unit including
an access request receiving section for receiving, through the communication device, a request from a user for access to a dispersed piece of traceability information on each product;
an access authority checking section for checking whether the user requesting access is authorized to access the traceability information to which the access is requested;
a location specification section for specifying a location of a piece of the traceability information to which the user requests access, in a location management master database where each piece of traceability information is associated with a location of the piece of traceability information; and
an access request execution section for executing an access request from the user in accordance with the location of the traceability information specified by the location specification section.

2. The traceability system according to claim 1, wherein
a part or all of the dispersed pieces of traceability information on each of the products are stored in accordance with a predetermined format in an electronic tag that is a memory attached to the product; and
the rest of the pieces of traceability information on the product are stored in a center information database of an information center server.

3. The traceability system according to claim 2, wherein the access authority checking section includes processing of determining whether or not the access request from the user requests an appropriate business relationship, in reference to a business relationship master database storing information on business relationships between companies, recognized as being appropriate, among transactions between companies that constitute the product distribution.

4. The traceability system according to claim 3, wherein the access authority checking section includes processing of determining whether or not the access request from the user requests a proper business process sequence, in reference to a business process master database in which business processes constituting the product distribution are associated with a proper sequence for the business processes.

5. The traceability system according to claim 4, wherein the access authority checking section includes processing of determining whether or not the access request from the user requests a suitable processing content, in reference to a database storing information on suitable processing contents set for every user for traceability information on each product.

6. The traceability system according to claim 5, wherein
the database which stores information on suitable processing contents set for every user for traceability information on each product includes:
a processing authority database which is provided to the information center server, and in which each product is associated with suitable processing contents for the traceability information on the product; and
a processing authority location management database in which each product is associated with a location of the information on the suitable processing contents for the traceability information on the product; and
the access authority checking section includes
specification processing for specifying, in the processing authority location management database, a location of the information on the suitable processing contents for the traceability information on the product to which the user requests access; and
determination processing for determining whether or not the access request from the user requests suitable processing contents for the traceability information targeted by the access request, in reference to the processing authority database in accordance with the specified location of the suitable processing contents for the traceability information.

7. The traceability system according to claim 6, wherein a format in which a part or all of the pieces of traceability information on each product are stored in the electronic tag differs among industries each performing the product distribution.

8. The traceability system according to claim 7, wherein the portal site function section further includes an encoder/decoder for encoding and decoding the traceability information by using a corresponding one of an encoder key and a decoder key obtained from an encoding/decoding database which stores the keys for encoding and decoding the traceability information.

9. A traceability method in which a computer executes a traceability system for providing access to pieces of traceability information on the products, the pieces located at dispersed locations in product distribution in which multiple companies across single companies and groups participate, the computer comprising
a portal site function unit to which all users access as a gateway to the dispersed pieces of traceability information through a communication network, and which is connected to the communication network through a communication device, wherein
the portal site function unit executes the processes of:
receiving, through the communication device, a request from a user for access to a dispersed piece of traceability information on each product;
checking whether the user requesting access is authorized to access the traceability information to which the access is requested;
specifying a location of a piece of the traceability information to which the user requests access, in a location management master database in which each piece of traceability information is associated with a location of the traceability information;
executing an access request from the user in accordance with the location of the traceability information specified by the location specification section.

10. A traceability program for a computer implementing a traceability system for providing access to pieces of traceability information on the products, the pieces located at dispersed locations in product distribution in which multiple companies across single companies and groups participate, the program causing the computer to execute the steps of:
receiving, through the communication device, a request for access to the dispersed traceability information on products;
checking whether the user having requested access is authorized to access the traceability information for which the access is requested;
specifying a location of the traceability information requested for access by the user, in a location management master database in which each piece of traceability information and a location of the traceability information are associated with each other; and
executing an access request from the user in accordance with the location of the traceability information specified by the location specification section.
